# EUROPEAN PATENT APPLICATION

(11) **EP 3 779 860 A1**
(43) Date of publication of application: **17.02.2021**
(21) Application number: 19777276.7
(22) Date of filing: 26.03.2019
(51) Int. Cl.: G06Q 50/30, G06Q 10/06, G08G 1/00

(54) **PLATOONING OPERATION SYSTEM AND PLATOONING OPERATION METHOD**

(30) Priority: 28.03.2018 JP 2018062563
(71) Applicant: KABUSHIKI KAISHA TOSHIBA, Minato-ku Tokyo 105-0023 (JP); Toshiba Digital Solutions Corporation, Kawasaki-shi, Kanagawa 212-0013 (JP)
(72) Inventor: SHIDA, Koichi, Kawasaki-shi, Kanagawa (JP); OKAMOTO, Toshio, Kawasaki-shi, Kanagawa (JP); MIYOSHI, Miyoko, Kawasaki-shi, Kanagawa (JP); WATABIKI, Masaru, Kawasaki-shi, Kanagawa (JP); SAITO, Masatomo, Kawasaki-shi, Kanagawa (JP); KOMATSUBARA, Wataru, Kawasaki-shi, Kanagawa (JP); HATAFUKU, Yasuto, Kawasaki-shi, Kanagawa (JP); NAGASHIMA, Taro, Tokyo 105-0001 (JP); TAKAHASHI, Masanori, Tokyo 105-0001 (JP); IWASAKI, Motokazu, Kawasaki-shi, Kanagawa (JP); KITAMI, Kaori, Kawasaki-shi, Kanagawa (JP); IKEDA, Yoko, Kawasaki-shi, Kanagawa (JP); IUCHI, Shinsuke, Kawasaki-shi, Kanagawa (JP); SHIRAISHI, Tatsuki, Kawasaki-shi, Kanagawa (JP); SATO, Michiyo, Kawasaki-shi, Kanagawa (JP)
(74) Representative: Moreland, David
(86) International application number: PCT/JP2019/012945
(87) International publication number: WO 2019/189224

(57) **Abstract**

This embodiment provides a platooning operation system capable of managing allocation of a driver of a vehicle merging the platoon to a vehicle leaving the platoon. In this embodiment, a platooning operation system organizes a platoon by causing a plurality of vehicles to cooperate on a predetermined route. The system includes an application reception processor and an application management processor. The application reception processor accepts an application of a vehicle to join to the platoon including at least a designation of a platoon of a plurality of platoons for which a departure time and an arrival time at each point located on the route are preset, and a designation of a departure point and an arrival point on the route. The application management processor performs management of the application including determination on permission of reception of the application such that number of cooperating vehicles in each of the plurality of platoons does not exceed a predetermined number.

## Description

### Technical Field

Embodiments described herein relate generally to a platooning operation system and a platooning operation method.

### Background Art

Recently, platooning of traveling by forming a platoon of a plurality of vehicles has been focused in accordance with advance of the driver assistance technology, the automatic drive technology, and the like.

### Citation List

### Patent Literature

Patent Literature 1: JP 2017-62691 A

### Summary of Invention

### Technical Problem

When a platoon in which one manned vehicle guides a plurality of unmanned vehicles is organized, a system serving as a platform which provides a system and the like of managing the number of cooperative vehicles of the platoon and managing allocation of a driver of a vehicle merging the platoon to a vehicle leaving the platoon is required.

Considering the above circumstances, one of embodiments described herein aims to provide a platooning operation system and a platooning operation method capable of managing the number of cooperative vehicles of the platoon and managing allocation of a driver of a vehicle merging the platoon to a vehicle leaving the platoon.

### Solution to Problem

In the present embodiment, a platooning operation system organizes a platoon by causing a plurality of vehicles to cooperate on a predetermined route. The system includes an application reception processor and an application management processor. The application reception processor accepts an application of a vehicle to join to the platoon including at least a designation of a platoon of a plurality of platoons for which a departure time and an arrival time at each point located on the route are preset, and a designation of a departure point and an arrival point on the route. The application management processor performs management of the application including determination on permission of reception of the application such that number of cooperating vehicles in each of the plurality of platoons does not exceed a predetermined number.

### Brief Description of Drawings

FIG. 1 is a diagram showing an example of a platooning operation system according to an embodiment.
FIG. 2 is a diagram illustrating a summary of platooning of vehicles performed by the platooning operation system according to the embodiment.
FIG. 3 is a diagram showing an example of merging or separation of a platoon unit which can be performed in the platooning operation system according to the embodiment.
FIG. 4 is functional block diagram showing a service center (server) according to the embodiment.
FIG. 5 is a diagram showing an example of a hardware configuration of the service center (server) according to the embodiment.
FIG. 6 is a table showing an example of timetable data for operation used in the platooning operation system according to the embodiment.
FIG. 7 is a table showing an example of application data used in the platooning operation system according to the embodiment.
FIG. 8 is a table showing an example of application status management data used in the platooning operation system according to the embodiment.
FIG. 9 is a table showing an example of driver adjustment management data used in the platooning operation system according to the embodiment.
FIG. 10 is a first diagram illustrating a summary of the driver adjustment process performed in the platooning operation system according to the embodiment.
FIG. 11 is a second diagram illustrating a summary of the driver adjustment process performed in the platooning operation system according to the embodiment.
FIG. 12 is a flowchart showing a flow of an application management process performed in the platooning operation system (service center) of the embodiment.
FIG. 13 is a flowchart showing a flow of a driver adjustment process performed in the platooning operation system (service center) of the embodiment.
FIG. 14 is a diagram illustrating a summary of a modified example of vehicle platooning performed by the platooning operation system of the embodiment.
FIG. 15 is a diagram showing an application screen example in the modified example of the vehicle platooning performed by the platooning operation system of the embodiment.

### Mode for Carrying Out the Invention

Embodiments will be described hereinafter with reference to the accompanying drawings.

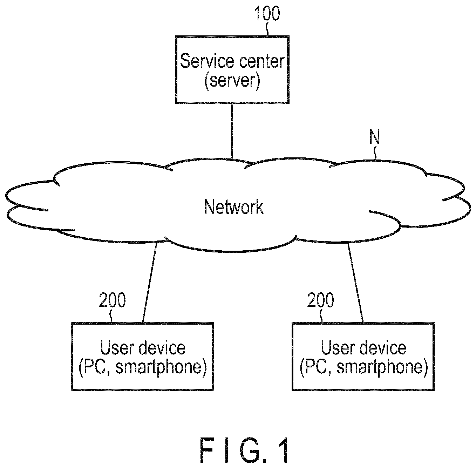

FIG. 1 is a diagram showing an example of a platooning operation system of the present embodiment.

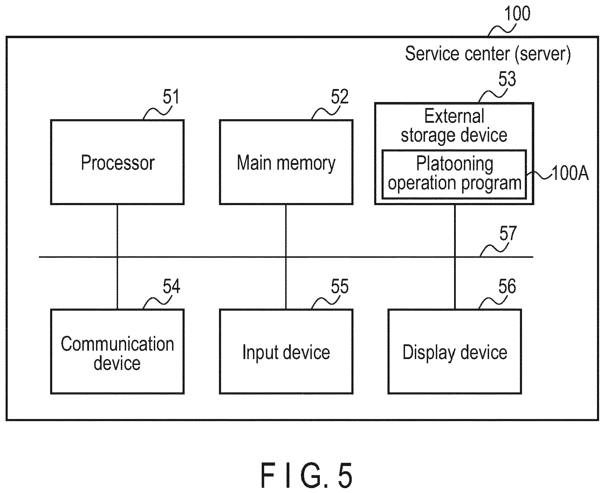

This platooning operation system is a system implemented by a service center 100 or, more specifically, a computer called, for example, a server or the like installed in the service center 100. The server is a processor comprising at least a processor (CPU: Central Processing Unit), a communication device, and a storage device, and its configuration is not limited. The computer installed in the service center 100 as the server may be a computer or, for example, a plurality of computers cooperating for load distribution or the like. A schematic hardware configuration example of the server will be described below with reference to FIG. 5.

The service center 100 accepts, for example, applications to require joining of vehicles to a platoon from user devices 200 such as PC (Personal Computer) or smartphones via a network N such as the Internet. The user devices 200 may be provided at business bases of a logistic company and the like or may be owned by individuals. In other words, a vehicle made to join the platoon may not only be a truck of a logistic company, but also a private car.

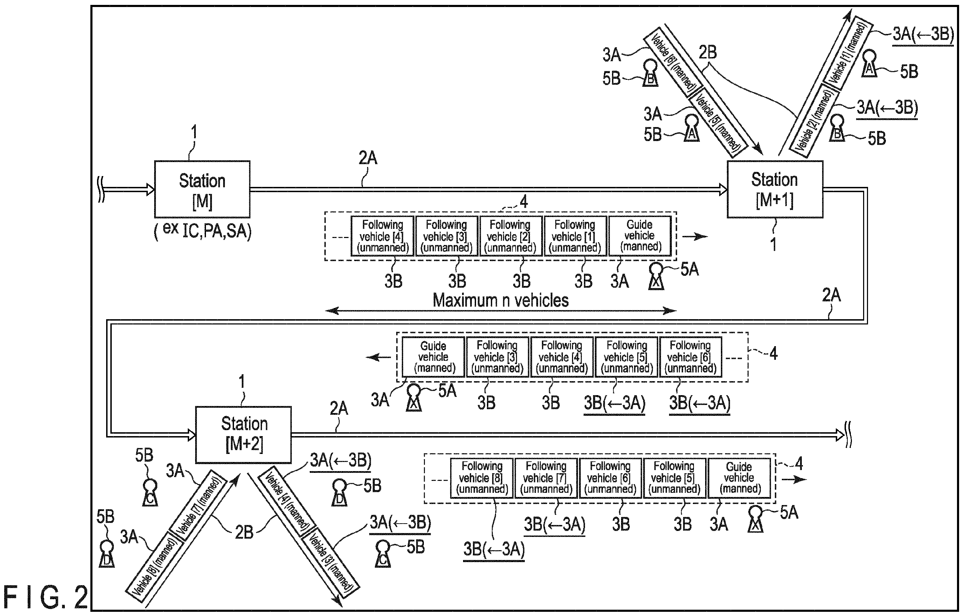

First, a summary of the vehicle platooning performed by the platooning operation system will be described with reference to FIG. 2.

For example, an expressway or the like is assumed to be a road on which platooning can be performed, and is referred to as a platoonable road 2A. In addition, for example, a general road or the like is assumed to be a road on which platooning cannot be performed, and is referred to as a non-platoonable road 2B. This platooning operation system can organize a platoon for a plurality of platoonable roads 2A. The platoonable roads 2A are often hereinafter referred to as routes.

Furthermore, it is assumed that a plurality of stations 1 for forming or disassembling the platoon 4 are provided on the platoonable roads 2A. For example, the stations 1 are provided near interchanges which are exits and entrances of the platoonable roads 2A.

In this platooning operation system, a manned vehicle 3A (i.e., a vehicle which a driver 5A drives) runs so as to depart or arrive at each station 1 at a predetermined time, on the platoonable roads 2A. In addition, in this platooning operation system, for example, several vehicles 3A run at regular intervals in one day, on the platoonable roads 2A. Up to a predetermined number of unmanned vehicles 3B can be linked to the vehicle 3A. That is, the vehicle 3A is a vehicle to guide the platoon 4. Incidentally, the vehicle 3A may not be necessarily located at the lead position in the platoon 4. In addition, a manner of making one vehicle 3A and one or more vehicles 3B cooperate to run as the platoon 4 will not be described here. The vehicle 3A, i.e., the platoon 4 running on the platoonable roads 2A is often hereinafter referred to as a transport.

Application from the user device 200 to the service center 100 includes at least designation of the route (platoonable road 2A) and the transport (platoon 4), and designation of the station 1 which is a point for joining the platoon 4 and the station 1 which is a point for leaving the platoon 4. Therefore, a vehicle 3B may join the platoon 4 or a vehicle 3B may leave the platoon 4 at each station 1. First, this platooning operation system performs management of the applications including determination of the permission of reception of the application, from the use device 200, such that the number of linked vehicles in the platoon 4 does not exceed a predetermined number.

The vehicle 3B runs on the non-platoonable road 2B by the driving of a driver 5B to the station 1 on the platoonable road 2A which is a point for joining the platoon 4. The manned vehicle driven by the driver 5B before being made to join the platoon 4 is referred to as the vehicle 3A to be distinguished from the unmanned vehicle 3B, and a driver of the single vehicle 3A is referred to as the driver 5B to be distinguished from the driver 5A of the vehicle 3A guiding the platoon 4. The vehicle 3A shifts to the unmanned vehicles 3B by being made to join the platoon 4 at the station 1. The driver 5B driving the vehicle 3B to the station 1 is assigned to the vehicle 3A for which the station 1 is the point for separating from the platoon 4. The vehicle 3B having separated from the platoon 4 is assigned the driver 5B, shifts to the manned vehicle 3A and runs on the non-platoonable road 2B. The destination of the vehicle 3B having separated from the platoon 4 will not be described here.

Incidentally, FIG. 2 shows a situation that a vehicle [1] 3B and a vehicle [2] 3B in the platoon 4 running from a station [M] 1 to a station [M+1] 1 separate from the platoon 4 at the station [M+1] 1 and that a vehicle [5] 3B and a vehicle [6] 3B join the platoon 4 at the station [M+1] 1. As shown in FIG. 2, the vehicle [1] 3B and vehicle [2] 3B having separated from the platoon 4 at the station [M+1] 1 are assigned a driver [A] 5B of the vehicle [5] 3B and a driver [B] 5B of the vehicle [6] 3B having joined the platoon 4 at the station [M+1] 1, shift to the vehicle [1] 3A and vehicle [2] 3A and run on the non-platoonable roads 2B. In addition, a vehicle [5] 3A and a vehicle [6] 3A joining the platoon 4 at the station [M+1] 1, lack the drivers 5B and shift to the vehicle [5] 3B and vehicle [6] 3B.

In addition, FIG. 2 shows a situation on the platoon 4 leaving the station [M+1] 1 that the vehicle [3] 3B and vehicle [4] 3B in the platoon 4 separate from the platoon 4 at a station [M+2] 1, and that a vehicle [7] 3B and a vehicle [8] 3B join the platoon 4 at the station [M+2] 1. As shown in FIG. 2, the vehicle [3] 3B and vehicle [4] 3B having separated from the platoon 4 at the station [M+2] 1 are assigned a driver [C] 5B of the vehicle [7] 3B and a driver [D] 5B of the vehicle [8] 3B having joined the platoon 4 at the station [M+1] 1, shift to the vehicle [3] 3A and the vehicle [4] 3A and run on the non-platoonable roads 2B. The vehicle [7] 3A and the vehicle [8] 3A having joined the platoon 4 at the station [M+2] 1, lack the drivers 5B and shift to the vehicle [7] 3B and the vehicle [8] 3B.

The example that the number of vehicles 3B separating from the platoon 4 and the number of vehicles 3B joining the platoon 4 at each station [M+l, M+2] 1 match is shown in FIG. 2 to make the descriptions easily understood, but the numbers do not necessarily match. Secondly, this platooning operation system adjusts assignment of the driver 5B of the vehicle 3A joining the platoon 4 to the vehicle 3B separating from the platoon 4 at each station 1.

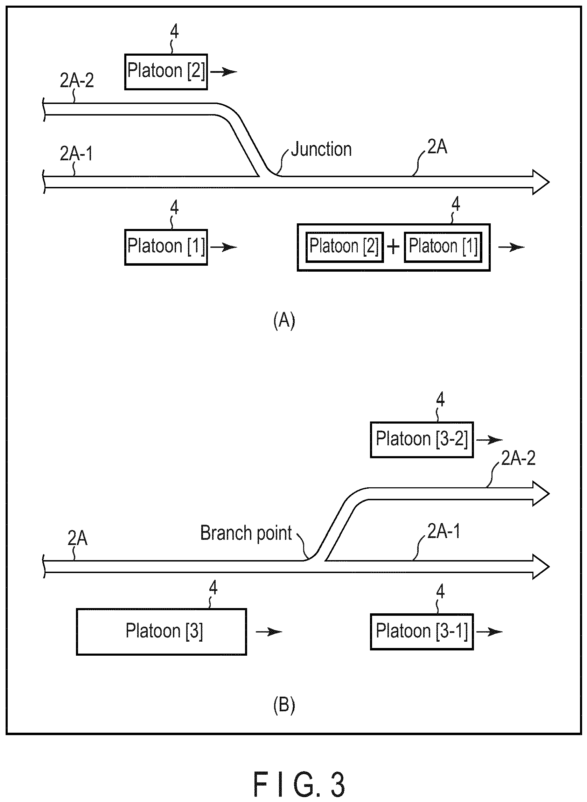

In addition, the situation that the vehicle 3B joins the platoon 4 and that the vehicle 3B separates from the platoon 4 is shown in FIG. 2, but platoons 4 can be made to join or platoons 4 can be made to separate in the platooning operation system of the present embodiment. FIG. 3 shows an example of joining of the platoons 4 or separation of the platoons 4.

In FIG. 3, (A) shows an example of making the platoons 4 join, and (B) shows an example of making the platoons 4 separate.

As shown in (A), for example, the platoonable road 2A where a platoonable road 2A-1 and a platoonable road 2A-2 join at a certain junction is assumed. In the case of such a platoonable road 2A, the platoon [1] 4 running on the platoonable road 2A-1 and the platoon [2] running on the platoonable road 2A-2 can be made to join while, for example, running, within the number of vehicles which can cooperate as the platoon 4, after each of the platoons has passed the junction. For the joining, the number of vehicles which can cooperate, of the platoon [1] 4 running on the platoonable road 2A-1 and the platoon [2] 4 running on the platoonable road 2A-2 may be set. Of course, three or more platoons 4 can also be made to join to one platoon 4.

In addition, as shown in (B), for example, the platoonable road 2A divided into a platoonable road 2A-1 and a platoonable road 2A-2 at a certain branch point is assumed. In the case of such a platoonable road 2A, the platoon [3] 4 running on the platoonable road 2A-1 can be made to separate into the platoon [3-1] 4 running on the platoonable road 2A-1 and the platoon [3-2] running on the platoonable road 2A-2 in front of the branch point, while, for example, running. After the separation, the number of vehicles which can cooperate can be set for each of the platoon [3-1] 4 running on the platoonable road 2A-1 and the platoon [3-2] 4 running on the platoonable road 2A-2. Of course, one platoon 4 can be made to separate into three or more platoons 4.

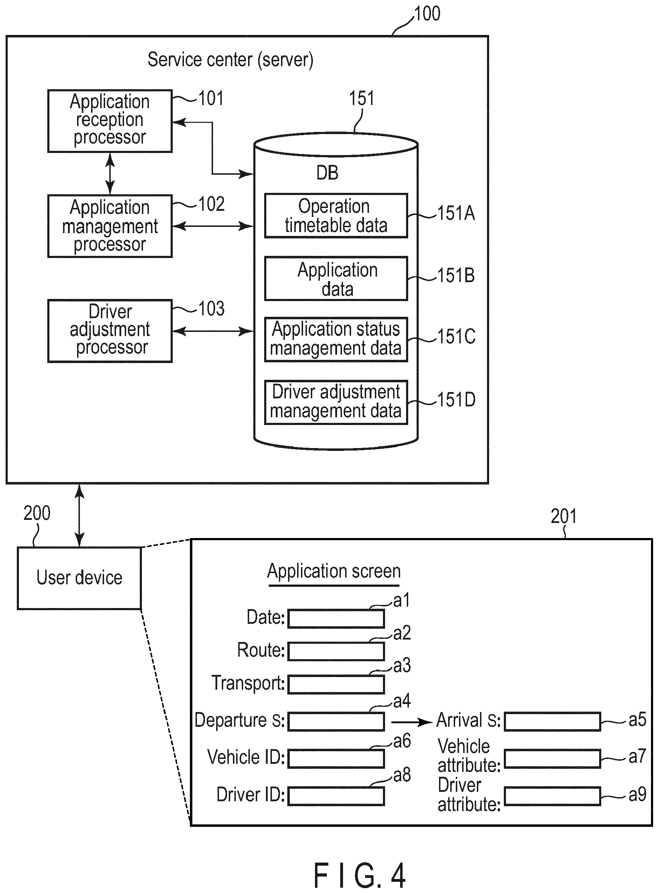

By making the platoons 4 join or making the platoons 4 separate, for example, a rest time of several drivers 5A can be secured after joining or before the separation. Incidentally, management of application can be performed for the platoons 4 which are made to join and separate, by handling the platoons 4 of the minimum configuration before joining or after separation, similarly to the platoons 4 which are not made to join or separate. FIG. 4 is a functional block diagram of the service center (server) 1 of the present embodiment.

As shown in FIG. 4, the service center 100 comprises an application reception processor 101, an application management processor 102, a driver adjustment processor 103, and a DB (DataBase) 151. Operation timetable data 151A, application data 151B, application status management data 151C, and driver adjustment management data 151D, which will be described later, are stored in the DB 151.

As described above, the server is a processor comprising at least a processor, a communication device, and a storage device. The application reception processor 101, the application management processor 102, and the driver adjustment processor 103 are constructed by executing a program stored in a storage device by a processor. In addition, DB 151 is constructed on a storage device. An example of the hardware configuration of the service center (server) 1 is shown in FIG. 5.

As shown in FIG. 5, the service center (server) 1 comprises a processor 51, a main memory 52, an external storage device 53, a communication device 54, an input device 55, a display device 56, and the like. As described above, the platooning operation system may be constructed by a plurality of computers, and FIG. 5 schematically illustrates the hardware configuration example alone.

In the platooning operation system, a platooning operation program 100A stored in the external storage device 53 is loaded from the external storage device 53 to the main memory 52 and executed by the processor 51, and the application reception processor 101, the application management processor 102, and the driver adjustment processor 103 shown in FIG. 4 are thereby implemented. In addition, DB 151 shown in FIG. 4 is assumed to be constructed in the external storage device 53.

The communication device 54 is, for example, a device which performs communication with the user device 200 shown in FIG. 1. The input device 55 is a device for an operator and the like managing the platooning operation system to perform the information input including commands. The display device 56 is a device for performing information output to the operator and the like.

The descriptions returns to FIG. 4 to continue.

The application reception processor 101 performs processing of accepting the application for joining from the user device 200 to the platoon 4. The application reception processor 101 sends information e.g., an HTML (HyperText Markup Language) file to cause an application screen 201 to be displayed, to the user device 200 which has accessed the service center 100. As shown in FIG. 4, input items on the application screen 201 include date (a1), route (a2), transport (a3), departure station [departure S] (a4), arrival station [arrival S] (a5), identifier of vehicle 3A made to join platoon 4 [vehicle ID: Identification Data] (a6), attribute of vehicle 3A [vehicle attribute] (a7), identifier of driver 5B of vehicle 3A [driver ID] (a8), attribute of driver 5B [driver attribute] (a9), and the like. For example, the vehicle attribute includes the information that can recognize vehicles which need at least predetermined qualification such as vehicles carrying hazardous materials and large vehicles. The driver attribute includes at least the information that can recognize the qualification that the driver holds. Examples of the qualification include, for example, (ordinary, medium-sized or large-sized vehicle) driver license, a trailer license, a fork lift operator, slinging operator, mobile crane driver, various hazardous materials engineer, various high pressure gas manufacturing manager, filling operator, and the like. That is, the vehicle attribute includes the information that can recognize the vehicles requiring these qualifications. The vehicle attribute and the driver attribute are used for assignment of the driver 5B of the vehicle 3A joining the platoon 4 to the vehicle 3B separating from the platoon 4. More specifically, for example, when the vehicle 3B separating from the platoon 4 is a tank lorry, the attributes are used to assign the driver 5B who can drive a tank lorry.

In addition, the input items on the application screen 201 may also include identification information (invoice numbers and the like), delivery conditions (delivery method, designation of a transportation company, and the like) and the like of baggage carried by the vehicle 3A. These information items can be used for inspection for delivery of the baggage when the vehicle 3A joins the platoon 4 or when the vehicle 3B separates from the platoon 4. The inspection is performed in a baggage unit, a vehicle unit or a station unit, or by visual recognition, inspection or batch scan using RFID (Radio Frequency IDentifier) tags and the like. That is, loss of the baggage can be eliminated or the time of loss of the baggage can be specified by these information items.

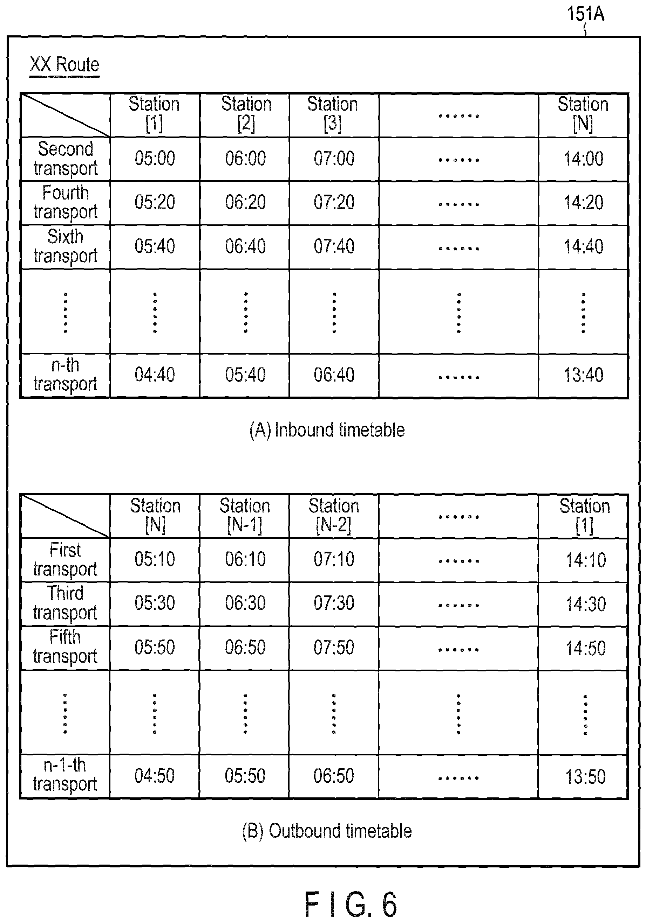

FIG. 6 shows an example of operation timetable data 151A stored in the DB 151.

The operation timetable data 151A is, for example, data set for each route (platoonable road 2A), and the departure time and the arrival time at each station 1 of each platoon 4 in both (inbound and outbound) directions are illustrated as shown in FIG. 6. The example that the departure station matches the arrival station for each transport is shown in FIG. 6 to make the description easily understood. However, since the junction and the branch point are able to exist in the route (platoonable road 2A), the departure station and the arrival station of each transport may not necessarily match. In the route (platoonable road 2A) where a junction or a branch point does not exist, for example, transport running only a partial section on the route (platoonable road 2A) where application is easily concentrated may also be provided.

Furthermore, the example that transports run in the same required times is shown in FIG. 6 to make the drawing easily understood. However, the required times may not necessarily be the same. For example, a special transport of a shorter required time than the normal transport may be provided by making the running speed faster or providing a nonstop station. In this case, charges for the special transport is considered to be set to be higher than those for the general transport. The charges do not need to be necessarily fixed charges, and may be varied according to, for example, the number of remaining vehicles obtained by subtracting the number of applications from the number of vehicles which can cooperate. For example, application may be accepted for a low charge under the situation that the number of remaining vehicles is a constant number or more, and the charge may be increased when the number of remaining vehicles is below a constant number. Alternatively, a desired amount may be made to be input at application and the charge may be determined according to the amount.

In addition, for example, a transport which enables the vehicle 3A needing a predetermined qualification such as a vehicle 3A carrying hazardous materials, a large-sized vehicle or the like to join, and a transport which cannot enable such a vehicle 3A to join may be provided. In other words, a transport for which the driver 5A having a predetermined qualification is arranged may be provided. Of course, for example, a plurality of types of transports are not preliminarily provided for each qualification, but the driver 5A having the predetermined qualification may be adaptively arranged for the transport having the application including joining of the vehicle 3A which requires the predetermined qualification accepted.

Incidentally, desirably, the operation timetable data 151A is formed such that the number of transports in a certain time is limited within a predetermined number.

For example, a user who applies for having the vehicle 3A guided (as the vehicle 3B) from "station [1]" to "station [3]" "second transport" of "route xx" shown in FIG. 6 inputs "route xx" in route (a2), "second transport" in transport (a3), "station [1]" in departure S (a4), and "station [3]" in arrival S (S5), of the input items on the application screen 201. Incidentally, certain information is input to vehicle ID (a6), vehicle attribute (a7), driver ID (a8), and driver attribute (a9) regardless of the transports and the departure and arrival stations.

When receiving the application from the user device 200, the application reception processor 101 notifies the application management processor 102 of the application details. The application management processor 102 determines the permission of reception of the application and notifies the application reception processor 101 of the determination result. The determination on the permission of reception of the application performed by the application management processor 102 will be described later. When notified of non-permission of reception by the application management processor 102, the application reception processor 101 notifies the user device 200 of an error. When notifying an error, for example, the application reception processor 101 may simultaneously notify information of recommending the other transport that can accept the application.

In contrast, when notified that the application can be accepted, by the application management processor 102, the application reception processor 101 notifies the user device 200 of the reception of the application. The application reception processor 101 may quickly make the notification to the user device 200 when accepting the application or, for example, the application management processor 102 may make the notification at the timing different from the timing of accepting the application by the application reception processor 101.

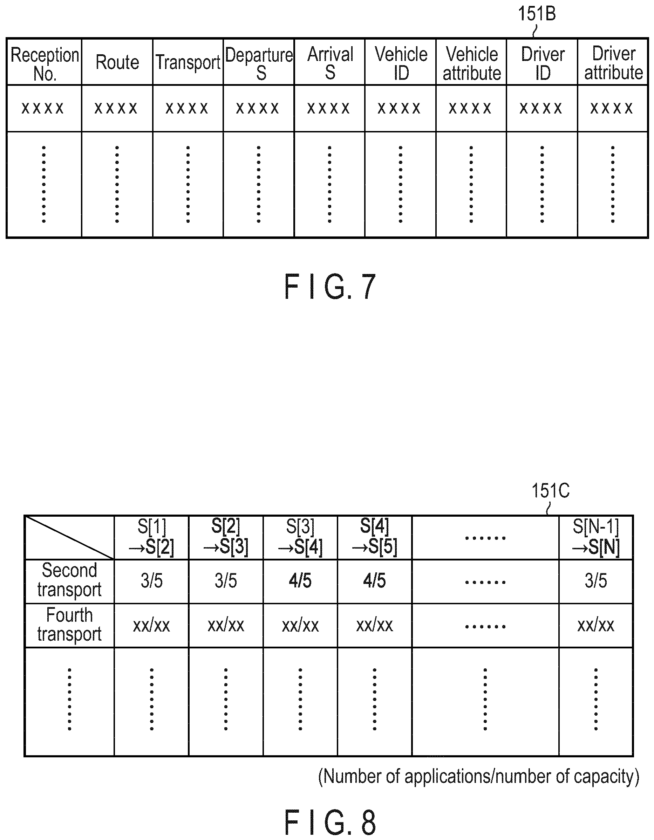

When being able to accept the application, the application reception processor 101 assigns reception numbers (reception No.) to the respective applications, and stores the details input on the application screen 201 in the DB 151 as application data 151B, for example, on the respective dates, in the order of reception numbers. FIG. 7 shows an example of operation timetable data 151B stored in the DB 151. As shown in FIG. 7, the application data 151B includes the reception numbers assigned by the application reception processor 101, and the input items (route, transport, departure station, arrival station, vehicle ID, vehicle attribute, driver ID, and driver attribute) on the application screen 201.

In addition, FIG. 8 shows an example of operation timetable data 151C stored in the DB 151.

The application status management data 151C is data to manage the number of cooperation of the vehicles 3B between the stations 1 of each transport (platoon 4) and, maintains the number of applications (upper row) and the number of capacity (lower row) (number of applications / number of capacity). When a section in which the number of applications reaches the number of capacity exists, in designated sections of the transport indicated by the application details notified by the application reception processor 101, the application management processor 102 notifies the application reception processor 101 of non-permission of reception of the application. In contrast, when the section in which the number of applications reaches the number of capacity does not exist, the application management processor 102 notifies that the application can be accepted, and performs updating the application status management data 151C to increase the number of applications in the designated section by 1.

For example, in response to the application from "station [1]" to "station [3]" of "second transport", the application management processor 102 increases each of the number of applications of "station [1] → station [2]" and "station [2] → station [3]" of "second transport" by 1. The application management processor 102 performs management of the applications, which includes determining whether it is possible to accept an application from the user device 200 such that the number of vehicles in the platoon 4 does not exceed a predetermined number.

Even when, for example, the number of applications to a certain transport (platoon 4) reaches the number of capacity in a certain section by management of the applications by the application management processor 102, if a vehicle 3B separates from the platoon 4 at a certain station 1, the application of the vehicle 3B designating a station after the station 1 as a departure point can be newly accepted. For example, as regards a transport (platoon 4) in which the number of vehicles 3B at the arrival time at a certain station 1 reaches the number of capacity, when one or more vehicles designating the station 1 as the arrival point cooperate, the application management processor 102 determines that the applications of the vehicles designating the station 1 as the departure point can be accepted where the number of one or more vehicles is set to the upper limit. Incidentally, as described above, when determining that the application from the user device 200 cannot be accepted for the reason that the number of applications reaches the number of capacity, for a certain transport, and notifying the user of an error, the application management processor 102 may simultaneously notify the information for recommending the other transport that can accept the application but may manage a condition of waiting for cancellation. In addition, when the transport exists in which the number of applications waiting for cancellation exceeds a certain number, an extra transport may be increased.

On the contrary, when the number of applications in all sections is 0, for a certain transport, the transport may be suspended.

Incidentally, desirably, the application management processor 102 forms data indicating the organization of each transport (platoon 4) and stores the data in the DB 151, although not shown in FIG. 4. More specifically, the data indicating which vehicle 3B is guided by each transport (platoon 4) between stations 1 is desirably formed and stored. For example, the data can be formed as a table type of holding the vehicle ID of the vehicle 3B in the same format as the application status management data 151C shown in FIG. 8.

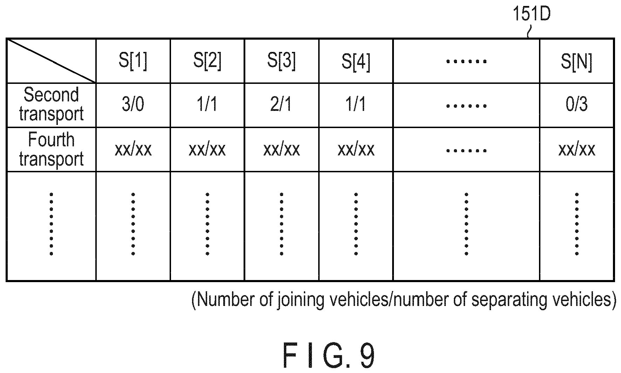

In addition, when determining that the application notified by the application reception processor 101 is acceptable, the application management processor 102 further executes updating the driver adjustment management data 151D stored in the DB 151. FIG. 9 shows an example of the driver adjustment management data 151D stored in the DB 151.

As shown in FIG. 9, the driver adjustment management data 151D holds the number of joining of the vehicles 3B (upper row) to the platoon 4 at each station 1 of each transport (platoon 4), and the number of separation of the vehicles 3B (lower row) from the platoon 4 (the number of joining / the number of separation). For example, as regards the applications from "station [1]" to "station [3]" of "first transport", the application management processor 102 increases the number of joining at "station [1]" of "first transport" by 1 and increases the number of separation of "station [3]" of "first transport" by 1. The qualification that the vehicles 3B separating from the platoon 4 need to have is not considered to make the description easily understood but, in fact, the number of joining and the number of separation are managed based on the qualification that the vehicles 3B separating from the platoon 4 need to have.

The driver adjustment management data 151D is the data used by the driver adjustment processor 103. If the number of joining matches the number of separation at all the stations 1 of all transport, the driver 5B who has driven the vehicle 3A joining the platoon 4 to the station 1 may be assigned to the vehicle 3B separating from the platoon 4. In many cases, however, the number of joining and the number of separation at each station 1 mismatch.

When the number of joining is larger than the number of separation, the drivers 5B remain. In other words, the vehicles 3B to which the drivers 5B are to be assigned are short. In contrast, when the number of joining smaller than the number of separation, the drivers 5B are short. In other words, the vehicles 3B to which the drivers 5B are to be assigned remain.

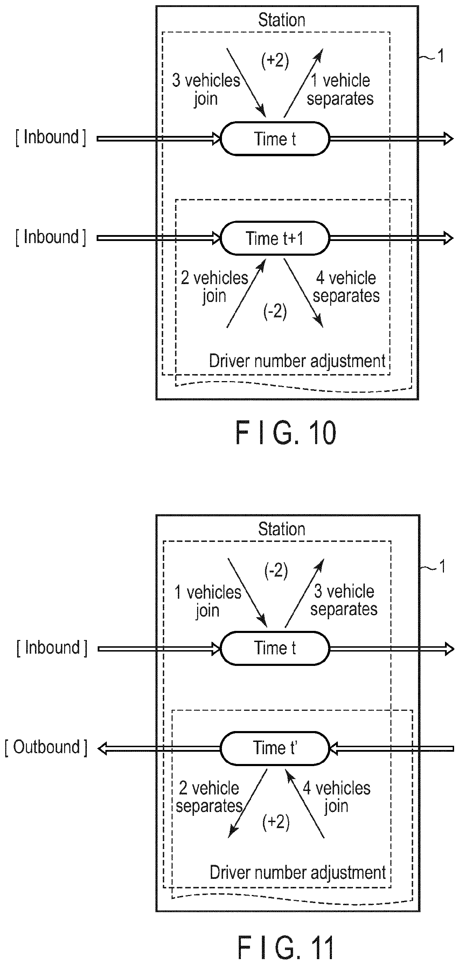

The driver adjustment processor 103 solves the mismatch between the number of joining and the number of separation by the number of platoons 4 arriving and leaving within a certain period. A summary of the driver adjustment process performed by the driver adjustment processor 103 will be described with reference to FIG. 10 and FIG. 11.

As shown in FIG. 10, for example, it is assumed that the number of joining of a certain transport (platoon 4) which arrives at (or leaves) a certain station 1 at time t is larger than the number of separation by 2. In this case, two drivers 5B remain. In addition, it is assumed that the number of joining of the subsequent transport (platoon 4) arriving at (or leaving) this station 1 at time t+1 is smaller than the number of separation by 2. In this case, two vehicles 3B remain. The driver adjustment processor 103 assigns two drivers remaining at time t to the vehicles 3B remaining at time t+1. FIG. 10 shows a case where the difference between the number of joining and the number of separation at time t matches the difference between the number of joining and the number of separation at time t+1, to make the drawing easily understood. In many cases, however, the differences mismatch.

For example, when the number of joining at time t+1 is smaller than the number of separation by 1, one driver 5B still remains. In this case, the driver adjustment processor 103 assigns two drivers 5A remaining at time t to the vehicle 3B separating at time t+1 with high priority, and further adjusts the driver 5A in a remaining state at time t+1 to a transport (platoon 4) subsequent to the transport (platoon 4) of time t+1.

In addition, the driver adjustment processor 103 may adjust the driver 5A not only to the transport (platoon 4) of the same direction, but also to a transport (platoon 4) arriving at (or leaving) the same station 1 from an opposite direction. FIG. 11 shows a case of adjusting the driver 5A between a certain transport (platoon 4) arriving at (or leaving) a certain station 1 at time t and a certain transport (platoon 4) arriving at (or leaving) this station 1 from the opposite direction at time t'. In addition, FIG. 11 shows an example where the vehicle 3B remains at time t and the driver 5B remaining at time t' is assigned to the remaining vehicle 3B, oppositely to the example shown in FIG. 10.

Incidentally, for example, when the number of joining is larger than the number of separation for any transport (platoon 4) at a certain station 1 and the number of separation is larger than the number of joining for any transport (platoon 4) at another station 1, i.e., when the mismatch between the number of joining and the number of separation occurs, the mismatch between the number of joining and the number of separation often cannot be solved in a certain period. More specifically, the vehicle 3B to which the driver 5B in a remaining state at a certain time can be assigned may exist for a period longer than a certain period or the driver 5B who can be assigned to the vehicle 3B in a remaining state at a certain time may not exist for a period longer than a certain period.

The driver adjustment processor 103 arranges a vehicle (bus) dedicated for personnel transport to transport the driver 5B to, for example, a station or the like near the station 1, to the driver 5B for whom the assignable vehicle 3B does not exist for a period longer than a certain period. In addition, the driver adjustment processor 103 arranges the driver who is to drive the vehicle 3B and run on the non-platoonable road 2B, to the vehicle 3B for which the assignable driver 5B does not exist for a period longer than a certain period. More specifically, the driver adjustment processor 103 forms operation plans of the vehicles (buses) dedicated for personnel transport and the drivers. For example, a manner of a crew operation plan in the railroad scheduling, and the like can be applied to manners of forming the operation plans. These operation plans are stored in the DB 151 as resource operation plan data not shown in FIG. 4 and the like. Incidentally, the operation of the vehicles (buses) dedicated for personnel transport and the drivers, based on the resource operation plan data, will not be described here. The driver adjustment processor 103 notifies the user device 200 which vehicle 3B is assigned the driver 5B and that the driver 5B is not assigned to any vehicles 3B and rides a vehicle (bus) dedicated for personnel transport.

In addition, for example, the manner of the crew operation plan in the railroad scheduling can also be applied to the arrangement of the driver 5A who is to drive the vehicle 3A guiding the platoon 4. Furthermore the vehicle 3A which the driver 5A is to drive may be a vehicle (bus) dedicated for personnel transport. Bias of personnel can be reduced and a rest time of the driver 5A can be secured by using the vehicles (buses) dedicated for personnel transport as the moving means of the driver 5A.

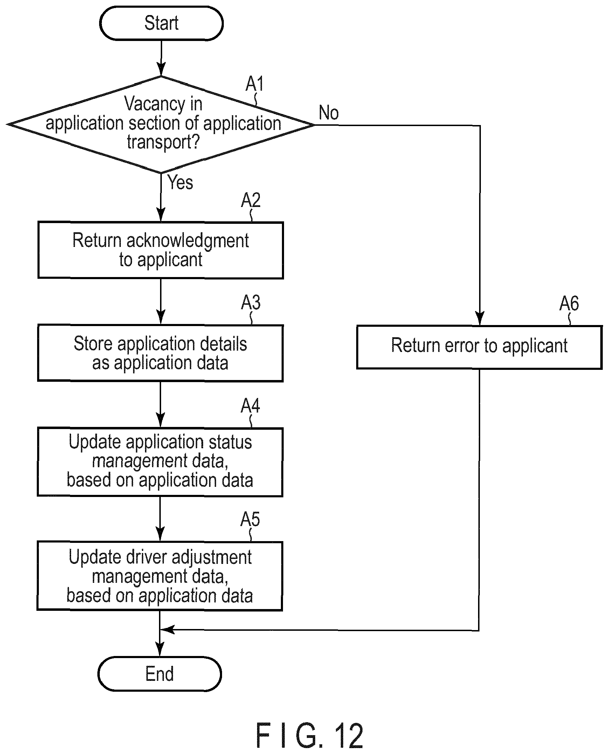

FIG. 12 is a flowchart showing a flow of the application management process performed in the platooning operation system (service center 100).

When accepting the application from the user device 200, the service center 100 checks whether there is vacancy in a specified section of a specified transport(platoon 4) or not, with reference to the application status management data 151C stored in the DB 151 (step A1). More specifically, the service center 100 checks whether the section where the number of applications reaches the number of capacity exists in a specified section or not. When there is vacancy (step A1: YES), i.e., when the section where the number of applications reaches the number of capacity does not exist in the specified section, the service center 100 returns an acknowledgment of the application to the applicant (step A2) and stores the application details in the DB 151 as the application data 151B (step A3). Based on the application data 151B stored in the DB 151, the service center 100 updates the application status management data 151C of the DB 151 (step A4) and updates the driver adjustment management data of the DB 151 (step A5).

In addition, when there is no vacancy in the specified section of the specified transport (platoon 4) (step A1: NO), more specifically, when the section where the number of applications reaches the number of capacity exists in the specified section, the service center 100 returns an error to the applicant (step A6). As described above, when returning an error, for example, the service center 100 may simultaneously notify the information for recommending the other transport that can accept the application or may manage the condition of waiting for cancellation. In addition, when the transport exists in which the number of applications waiting for cancellation exceeds a certain number, an extra transport may be increased.

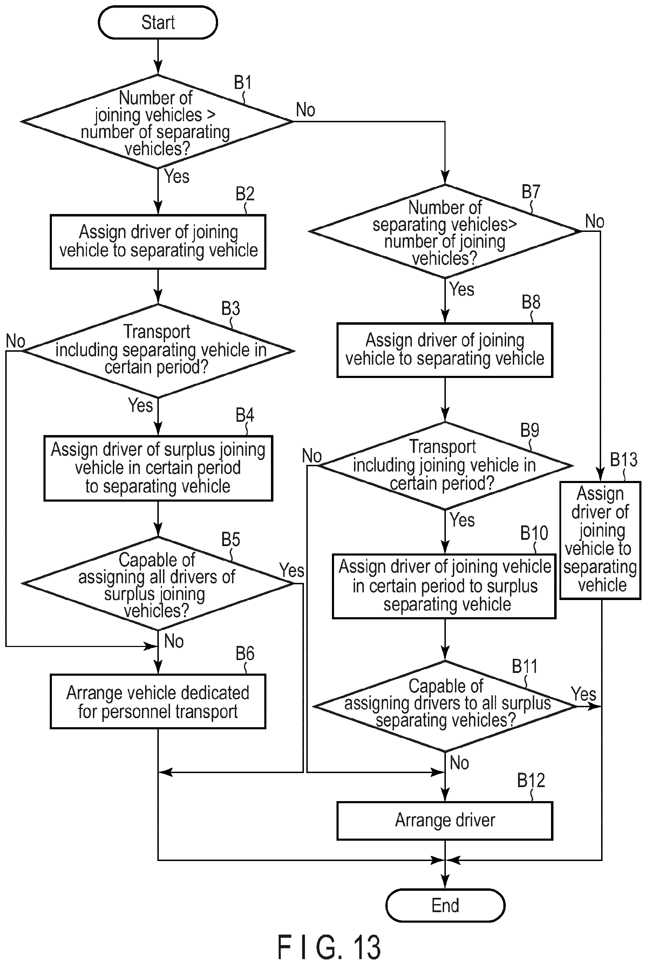

FIG. 13 is a flowchart showing a flow of the driver adjustment process performed in the platooning operation system (service center 100). As regards all the stations 1 of all the routes (platoonable road 2A), the service center 100 performs a process shown in FIG. 13 for all transports (platoons 4) passing at the stations 1, in the order of earlier arrival times to the stations 1 or earlier departure times. Incidentally, for example, the driver adjustment process is performed at a predetermined time earlier than the departure time of the first transport of each date. That is, the application to the transports of the date of processing is closed when the driver adjustment process is performed.

The service center 100 first checks whether the number of the joining vehicles is larger than the number of the separating vehicles (step B1). The number of the joining vehicles and the number of the separating vehicles may include the number of the surplus vehicles succeeded from the preceding transport (platoon 4). When the number of the joining vehicles is larger than the number of the separating vehicles (step B1: YES), the service center 100 first assigns the driver of the joining vehicle to the separating vehicle from the transport (platoon 4) (step B2). At this time, when the surplus joining vehicle succeeded from the preceding transport (platoon 4) exists, the service center 100 assigns the driver of the joining vehicle with higher priority.

The service center 100 checks whether the transport (platoon 4) including the separating vehicle in a certain period exists or not (step B3) and, when the transport exists (step B3: YES), then the service center 100 assigns the driver of the joining vehicle to the separating vehicle from the transport (platoon 4) in the certain period (step B4). At this time, too, when the succeeded surplus joining vehicle exists, the service center 100 assigns the driver of the joining vehicle with higher priority.

The service center 100 checks whether all drivers of the surplus joining vehicles are assigned to any vehicles or not (step B5) and, when the driver who is not assigned to any vehicles exists (step B5: NO), the service center 100 arranges a vehicle (bus) dedicated for personnel transport to the driver (step B6).

When the number of the separating vehicles is larger than the number of the joining vehicles (step B1: NO, step B7: YES), the service center 100 first assigns the driver of the joining vehicle to the transport (platoon 4) to the separating vehicle (step B8). At this time, when the succeeded surplus separating vehicle exists, the service center 100 assigns the driver to the separating vehicle with higher priority.

The service center 100 checks whether the transport (platoon 4) including the separating vehicle in a certain period exists or not (step B9) and, when the transport exists (step B9: YES), then the service center 100 assigns the driver of the joining vehicle to the transport (platoon 4) in the certain period, to the separating vehicle (step B10). At this time, too, when the succeeded surplus separating vehicle exists, the service center 100 assigns the driver to the separating vehicle with higher priority.

The service center 100 checks whether all drivers are assigned to all the surplus separating vehicles or not (step B11) and, when the vehicle which is not assigned the driver exists (step B11: NO), the service center 100 arranges a driver to the vehicle (step B12).

When the number of the separating vehicles matches the number of the joining vehicles (step B7: YES), the service center 100 assigns the driver of the joining vehicle to the separating vehicle (step B13).

Thus, the platooning operation system can manage the number of vehicles which can cooperate in the platoon and manage assignment of the driver of the vehicle joining the platoon to the vehicle separating from the platoon.

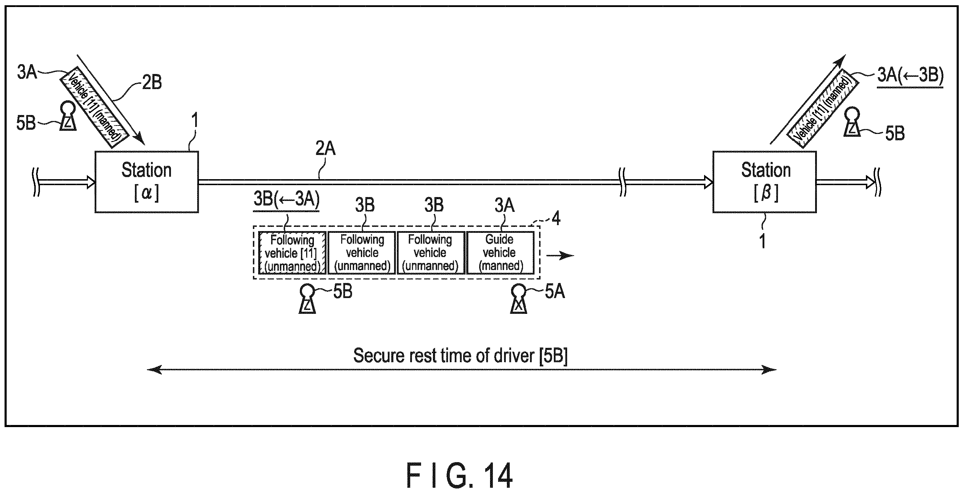

Incidentally, the above descriptions are based on the feature that when the vehicle 3A joins the platoon 4 the driver 5B separates and moves to the (unmanned) vehicle 3B, but user's needs are considered to arise that the driver 5A wishes to continue riding the vehicle 3B after joining the platoon 4, and to restart driving the vehicle 3B when separating from the platoon 4. As shown in FIG. 14, for example, the period in which the vehicle 3B joins the platoon 4 is considered to be secured as a rest time of the driver 5B.

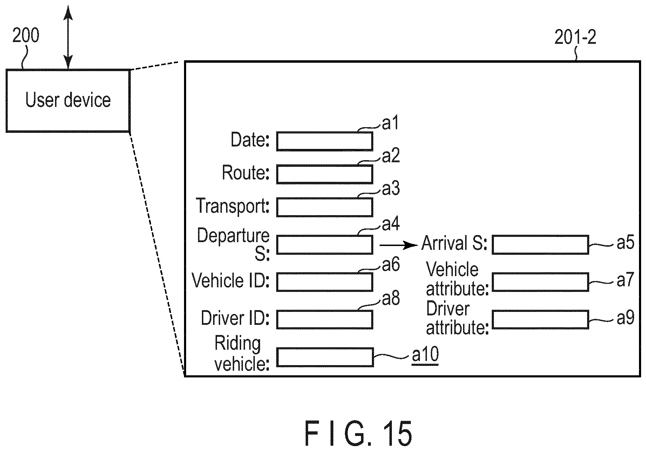

To respond to the needs, in the platooning operation system, riding vehicle (a10) may be further set as the input item on the application screen 201 as shown in, for example, FIG. 15. Riding vehicle (a10) is an item to specify whether the driver 5B rides the vehicle 3B joining the platoon 4 or not.

When riding vehicle is specified, the application management processor 102 does not update the driver adjustment management data 151D stored in the DB 151 in relation to the vehicle 3B. More specifically, the vehicle 3B is not added to the number of the joining vehicles or the number of the separating vehicles. In addition, the driver adjustment processor 103 excludes the vehicle 3B and the driver 5B from the assignment process of the driver 5B to the joining vehicle 3B for the separating vehicle 3B. For example, the driver adjustment processor 103 can obtain riding the vehicle of the driver 5B by enabling the application data 151B stored in the DB 151 to be referred to based on the vehicle ID.

Thus, the platooning operation system can also respond to the needs for the purpose as shown in FIG. 14.

In addition, when riding vehicle is designated, by setting the input item of riding vehicle (a10) on the application screen 201, operation of using the driver 5B as the driver 5A of the vehicle 3A guiding the platoon 4 can be performed. For example, information indicative of either driving the only non-platoonable road 2B or also capable of driving the platoonable road 2A is included as the driver attribute (a9). In the former case, the driver 5B is handled as described with reference to FIG. 14. In the latter case, the driver 5B is handled as a person who can be used as the driver 5A of the vehicle 3A guiding the platoon 4. The application to request driving on the platoonable road 2A may also be favored in terms of fees. Enabling the driver 5B to be used as the driver 5A of the vehicle 3A guiding the platoon 4 can contribute to securing a rest time of the driver 5A of the vehicle 3A guiding the platoon 4 and to keeping a continuous drive time of the driver 5A within a legal time.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

1... station, 2A... platoonable road, 2B... non-platoonable road, 3... vehicle, 3A... manned vehicle, 3B... unmanned vehicle, 4... platoon, 5A... driver (of platoon guiding vehicle), 5B... driver (of single vehicle), 201... application screen, 100... service center, 101... application reception processor, 102... application management processor, 103... driver adjustment processor, 151... DB, 151A... operation timetable data, 151B... application data, 151C... application status management data, 151D... driver adjustment management data, 200... user device.

## Claims

1. A platooning operation system of organizing a platoon by causing a plurality of vehicles to cooperate on a predetermined route, the system comprising:
an application reception processor which accepts an application of a vehicle to join to the platoon including at least a designation of a platoon of a plurality of platoons for which a departure time and an arrival time at each point located on the route are preset, and a designation of a departure point and an arrival point on the route; and
an application management processor which performs management of the application including determination on permission of reception of the application such that number of cooperating vehicles in each of the plurality of platoons does not exceed a predetermined number.

2. The platooning operation system of claim 1, wherein
as regards a platoon in which the number of cooperating vehicles at an arrival time at a first point on the route reaches the predetermined number, when one or more vehicles designating the first point as an arrival point exist, the application management processor is configured to determine that application of a vehicle designating the first point as a departure point is acceptable where number of the one or more vehicles is an upper limit.

3. The platooning operation system of claim 2, further comprising a driver adjustment processor which assigns a driver of the vehicle designating the first point as the departure point, to the vehicle designating the first point as the arrival point.

4. The platooning operation system of claim 3, wherein the driver adjustment processor performs assignment of the driver such that a time in which the driver of the vehicle designating the first point as the departure point stands by the vehicle designating the first point as the arrival point is within a certain period.

5. The platooning operation system of claim 3 or 4, wherein
when the vehicle designating the first point as the arrival point which can be assigned the driver of the vehicle designating the first point as the departure point does not exist in a period longer than a certain period, the driver adjustment processor arranges a vehicle dedicated for personnel transport for the driver.

6. The platooning operation system of any one of claims 3 to 5, wherein when the driver of the vehicle designating the first point as the departure point who can be assigned to the vehicle designating the first point as the arrival point does not exist in a period longer than a certain period, the driver adjustment processor arranges a driver for the vehicle designating the first point as the arrival point.

7. A platooning operation method of organizing a platoon by causing a plurality of vehicles to cooperate on a predetermined route, the method comprising:
accepting an application of a vehicle to join to the platoon including at least a designation of a platoon of a plurality of platoons for which a departure time and an arrival time at each point located on the route are preset, and a designation of a departure point and an arrival point on the route; and
performing management of the application including determination on permission of reception of the application such that number of cooperating vehicles in each of the plurality of platoons does not exceed a predetermined number.

8. The platooning operation method of claim 7, wherein
as regards a platoon in which the number of cooperating vehicles at an arrival time at a first point on the route reaches the predetermined number, when one or more vehicles designating the first point as an arrival point cooperate, the performing the management of the application includes determining that application of a vehicle designating the first point as a departure point is acceptable where number of the one or more vehicles is an upper limit.

9. The platooning operation method of claim 8, further comprising assigning a driver of the vehicle designating the first point as the departure point, to the vehicle designating the first point as the arrival point.

10. The platooning operation method of claim 9, wherein the assigning the driver to the vehicle includes performing assignment of the driver such that a time in which the driver of the vehicle designating the first point as the departure point stands by the vehicle designating the first point as the arrival point is within a certain period.

11. The platooning operation method of claim 9 or 10, further comprising:
when the vehicle designating the first point as the arrival point which can be assigned the driver of the vehicle designating the first point as the departure point does not exist in a period longer than a certain period, arranging a vehicle dedicated for personnel transport for the driver.

12. The platooning operation method of any one of claims 9 to 11, further comprising:
when the driver of the vehicle designating the first point as the departure point who can be assigned to the vehicle designating the first point as the arrival point does not exist in a period longer than a certain period, arranging a driver for the vehicle designating the first point as the arrival point.
